# EUROPÄISCHE PATENTSCHRIFT

(11) **EP 0 984 368 B1**
(45) Veröffentlichungstag und Bekanntmachung des Hinweises auf die Patenterteilung: **03.09.2008**
(21) Anmeldenummer: 99116975.6
(22) Anmeldetag: 27.08.1999
(51) Int. Cl.: G06F 17/30

(54) **Verfahren zum Herstellen von Verweisen zwischen Dateien von Datenbanken und Computernetzwerk**
Method for generation of links between files of databases and computer network
Procédé pour génerer des liens entre fichiers dans des base de données et réseau d'ordinateurs

(30) Priorität: 02.09.1998 DE 19840000
(43) Veröffentlichungstag der Anmeldung: 08.03.2000
(73) Patentinhaber: Rauchfuss, Ingrid, 80639 München (DE)
(72) Erfinder: Rauchfuss, Ingrid, 80639 München (DE)
(74) Vertreter: Prechtel, Jörg

(56) Entgegenhaltungen:
- EP-A- 0 451 384
- WO-A-90/00776
- WO-A-95/03574
- US-A- 5 657 460
- US-A- 5 708 825
- US-A- 5 790 121

## Beschreibung

Die Erfindung betrifft ein Verfahren zum Herstellen von Verweisen zwischen Dateien in Datenbanken, die auf einem Speichermedium eines Zentralcomputers eines Computernetzwerks gespeichert sind, wobei das Computernetzwerk ferner wenigstens eine Bedienungseinheit zur Kommunikation mit dem Zentralcomputer und zur Betrachtung des Inhalts der Dateien auf einem Bildschirm umfaßt.

Das Arbeiten mit verschiedenen Dateien derartiger Datenbanken ist bei Computer-Betriebssystemen generell möglich, erfordert aber ein störendes Hin- und Herschalten zwischen den Dateien und u.U. eine zeitaufwendige Suche nach einer gewünschten Datei. Das Herstellen von Verweisen zwischen Dateien kann die Arbeit, insbesondere mit großen Datenbanken, erleichtern. Derartige Verweise zwischen Dateien sind insbesondere von den meisten "Homepages" im WWW (world wide web) bekannt. Aufgrund des Verweises steht dem Benutzer des Computernetzwerks beim Betrachten einer Datei auf dem Bildschirm beispielsweise ein Befehl zur unmittelbaren Darstellung einer anderen Text- oder Grafikdatei auf dem Bildschirm zur Verfügung (in der Regel durch "Anklicken" eines optisch hervorgehobenen Wortes oder Symbols in der Ausgangsdatei auf dem Bildschirm).

Das Herstellen von Verweisen zwischen Dateien einer Datenbank erfolgt üblicherweise während des Aufbaus der Datenbank oder im unmittelbaren Anschluß hieran durch entsprechende Programmierarbeiten eines Datenbank-Fachmanns. Diese Art der Herstellung von Verweisen zwischen Dateien weist mehrere Nachteile auf: Bei großen Datenbanken ist das Herstellen der Verweise äußerst zeitaufwendig und verzögert die Inbetriebnahme der Datenbank in dem Computernetzwerk. Ferner ist die Durchführung der entsprechenden Programmierarbeiten durch Fachleute teuer. Außerdem kann der Fall eintreten, daß die von dem Programmier-Fachmann bei oder nach der Erstellung der Datenbank hergestellten Verweise zwischen den Dateien nicht den Informationsbedürfnissen eines Benutzers bei der späteren Verwendung des Computernetzwerks entsprechen.

Aus dem Dokument US-A-5,657,460 ist ein Computernetzwerk bekannt mit einem Verfahren zum Herstellen von Verweisen zwischen durch Datenbanken verwalteten Dateien, die auf einem Speichermedium eines Zentralcomputers gespeichert sind, wobei Bedienungseinheiten zur Kommunikation mit dem Zentralcomputer und zur Betrachtung des Inhalts der Dateien auf einen Bildschirm vorhanden sind. Bei diesem Verfahren werden Verweise zwischen einer Ausgangsdatei einer Ausgangsdatenbank und Zieldateien einer Zieldatenbank angelegt. Als Folge eines Zieldarstellungsbefehls (z.B. eines Mausklicks) erfolgt eine unmittelbare Darstellung der Zieldatei. Allerdings werden die Verweise von einem so genannten "Developer" erstellt, und nicht vom eigentlichen Benutzer.

Aus dem Dokument EP 0 369 961 A2 ist ein Verfahren zum Herstellen von Verweisen bekannt, welches es allgemein einem Benutzer, d.h. auch einem Nicht-Datenbankfachmann ermöglicht, Verweisen von Ausgangsdateien zu Zieldateien zu folgen und Verweise zwischen Dateien jeglicher Art selbst zu erzeugen. Das in dem Dokument EP 0 810 520 A1 beschriebene Verfahren erlaubt es dem Benutzer, Verweise zu verändern, insbesondere einen Verweisungstext oder die zugeordnete Zieldatei.

Aufgabe der vorliegenden Erfindung ist es, ein Verfahren der eingangs genannten Art anzugeben, welches das automatische Herstellen anwenderorientierter Verweise in einer verteilten Umgebung erlaubt.

Diese Aufgabe wird gelöst durch ein Verfahren zum Herstellen von Verweisen zwischen Dateien in Datenbanken, die auf einem Speichermedium eines Zentralcomputers eines Computernetzwerks gespeichert sind, wobei das Computernetzwerk ferner wenigstens eine Bedienungseinheit zur Kommunikation mit dem Zentralcomputer und zur Betrachtung des Inhalts der Dateien auf einem Bildschirm umfasst, wobei das Herstellen eines Verweises zwischen Dateien auf Grundlage der von einem Benutzer bei der Verwendung des Computernetzwerks vorgenommenen Zuordnung einer Zieldatei einer Zieldatenbank zu einer anfänglich betrachteten Ausgangsdatei einer Ausgangsdatenbank erfolgt, wobei bei einer späteren, erneuten Betrachtung der Ausgangsdatei ein Zieldateidarstellungsbefehl eingebbar ist zur unmittelbaren Darstellung der dem jeweiligen Verweis entsprechenden Zieldatei auf dem Bildschirm, wobei ein von dem Zentralcomputer ständig ausgeführtes Überwachungsprogramm vom Benutzer erzeugte Zuordnungsinformationen, die jeweils eine Ausgangsdatei und eine dieser zugeordnete Zieldatei angeben, in einer Statistikdatei speichert, die auch die Häufigkeit der Herstellung gleicher Zuordnungsinformationen in einem Computernetzwerk mit mehreren Bedienungseinheiten und/oder mehreren Benutzern speichert, wobei der Zentralcomputer zu einem wahlweisen Zeitpunkt selbsttätig oder manuell ausgelöst aus den Zuordnungsinformationen entsprechende Verweise herstellt und dabei bei Auftreten von unterschiedlichen Zuordnungsinformationen , die ein- und dieselbe Ausgangsdatei mit unterschiedlichen Zieldateien in ein- und derselben Zieldatenbank verknüpfen, den der Ausgangsdatei zugeordneten Verweis auf der Grundlage der Zuordnungsinformation mit der größten Häufigkeit herstellt, und wobei die so hergestellten Verweise in einer Verweise-Datenbank abgespeichert werden, die sämtlichen Bedienungseinheiten zur Verfügung steht.

Das Herstellen eines Verweises zwischen Dateien erfolgt auf Grundlage der von einem Benutzer bei der Verwendung des Computernetzwerks vorgenommenen Zuordnung einer Zieldatei einer Zieldatenbank zu einer anfänglich betrachteten Ausgangsdatei einer Ausgangsdatenbank. Bei einer späteren, erneuten Betrachtung der Ausgangsdatei ist ein Zieldateidarstellungsbefehl eingebbar zur unmittelbaren Darstellung der Zieldatei auf dem Bildschirm.

Bei dem erfindungsgemäßen Verfahren erfolgt also das Herstellen von Verweisen zwischen Dateien nach der Inbetriebnahme der entsprechenden Datenbanken in dem Computernetzwerk, wodurch der oben beschriebene, bei den üblichen Verfahren auftretende Zeitverlust vermieden wird. Ferner entfallen die mit dem üblichen Herstellen von Verweisen durch einen Datenbank-Fachmann verbundenen Kosten. Außerdem werden die Verweise anwenderorientiert hergestellt, da die entsprechende Zuordnung einer Zieldatei zu einer anfänglich betrachteten Ausgangsdatei durch den Benutzer selbst, in der Regel an seinem Arbeitsplatz, bei der Arbeit mit den entsprechenden Datenbanken erfolgt. Damit wird nicht nur sichergestellt, daß die bei der täglichen Arbeit erforderlichen oder hilfreichen Verweise zwischen Dateien tatsächlich hergestellt werden, sondern man vermeidet auch das Auftreten nutzloser Verweise, die beim Arbeiten mit dem Computernetzwerk stören, Zeitverlust mit sich bringen und Speicherplatz auf dem Speichermedium des Zentralcomputers belegen. Hingegen erlauben die mit dem erfindungsgemäßen Verfahren anwenderorientiert hergestellten Verweise zwischen Dateien, daß der Benutzer bei einer späteren, erneuten Betrachtung der Ausgangsdatei einen Zieldatei-Darstellungsbefehl eingibt, mit dem er unmittelbar auf diejenige Zieldatei zugreifen und sie auf dem Bildschirm darstellen kann, die er selbst oder ein anderer Benutzer bei einer früheren Verwendung des Computernetzwerks der Ausgangedatei zugeordnet hat.

Ein von dem Zentralcomputer ständig ausgeführtes Überwachungsprogramm speichert die vom Benutzer erzeugten Zuordnungsinformationen in einer Statistikdatei, die vorzugsweise auch die Häufigkeit der Herstellung gleicher Zuordnungsinformationen, wobei zu einem wahlweisen Zeitpunkt manuell ausgelöst oder selbsttätig aus den Zuordnungsinformationen, vorzugsweise entsprechend ihrer Häufigkeit , entsprechende Verweise durch den zentralcomputer hergestellt werden. Die selbsttätige Erzeugung der Verweise wird von einem weiteren, von dem Zentralcomputer ausgeführten Programm vorgenommen , welches die Statistikdatei entsprechend auswertet.

Dies kann bevorzugt außerhalb der üblichen Arbeitszeiten der Benutzer des Computernetzwerks, z.B. nachts, erfolgen.

Die in der Statistikdatei abgespeicherten Zuordnungsinformationen jedes Benutzers lie fern ferner eine individuelle Charakterisierung seiner Interessen, was z.B. für Schulungszwecke vorteilhaft verwendet werden kann.

Bei Auftreten von unterschiedlichen Zuordnungsinformationen, die ein und dieselbe Ausgangsdatei mit unterschiedlichen Zieldateien in ein und derselben Zieldatenbank verknüpfen, wird durch Auswertung der Statistikdatei, vorzugsweise auf der Grundlage der Zuordnungsinformation mit der größten Häufigkeit der Verweis hergestellt.

Eine besonders effektive Verwendung des Computernetzwerks, insbesondere in einem Betrieb mit einer Mehrzahl von gleichartigen Arbeitsplätzen, die alle mit jeweils mindestens einer Bedienungseinheit ausgestattet sind, ist dadurch möglich, daß von einer Bedienungseinheit aus gesetzte Verweise in einer Verweise-Datenbank abspeicherbar sind, die sämtlichen Bedienungseinheiten gemeinsam ist. In diesem Fall kann ein Benutzer also von Verweisen profitieren, die seine Kollagen früher hergestellt haben.

Es ist sogar möglich, daß die Verweise in einer Verweise-Datenbank abspeicherbar sind, die in Zentralcomputer anderer Computernetzwerke übertragbar ist, vorzugsweise über eine Weitverkehrsnetz-(WAN; Wide-Area-Network-) Verbindung.

Eine solche WAN-Verbindung, die beispielsweise auch über das Internet erfolgen kann, bietet die Möglichkeit, daß das Computernetzwerk mit wenigstens einem zweiten vergleichbaren Computernetzwerk, insbesondere in einem vergleichbaren technischen Betrieb, verbunden ist zum Vergleichen und ggf. Aktualisieren von auf den jeweiligen Zentralcomputern gespeicherten Verweisen. Hierdurch stellt ein Benutzer die von ihm für sinnvoll erachteten Verweise nicht nur seinen Kollegen im gleichen technischen Betrieb, sondern auch Benutzern in anderen, vergleichbaren Betrieben zur Verfügung und kann umgekehrt von deren Verweisen profitieren. Somit entsteht auf besonders schnelle Weise ein Netz von anwenderorientierten Verweisen zwischen Dateien.

Das erfindungsgemäße Verfahren erleichtert die Arbeit mit Dateien in Datenbanken in einem Computernetzwerk, das einen Zentralcomputer mit Speichermedium und eine Bedienungseinheit zur Kommunikation mit dem Zentralcomputer und zur Betrachtung des Inhalts der Dateien auf einem Bildschirm umfaßt, wobei Mittel zum Herstellen eines Verweises zwischen Dateien auf Grundlage der von einem Benutzer bei der Verwendung des Computernetzwerks vorgenommenen Zuordnung einer Zieldatei einer Zieldatenbank zu einer anfänglich betrachteten Ausgangsdatei einer Ausgangsdatenbank und zum Eingeben eines Zieldateidarstellungsbefehls zur unmittelbaren Darstellung der Zieldatei auf dem Bildschirm bei einer späteren, erneuten Betrachtung der Ausgangsdatei vorgesehen sind.

Vorzugsweise ist in einem solchen Computernetzwerk vorgesehen, daß der Bildschirm der Bedienungseinheit ein berührungsempfindlicher Bildschirm (touch screen) ist. Bei einem derartigen berührungsempfindlichen Bildschirm werden Befehle durch Antippen von auf dem Bildschirm vordefinierten Feldern eingegeben. Eine derartige Ausführung bietet den Vorteil, daß die Bedienungseinheit aus einem einzigen Bauteil, nämlich dem berührungsempfindlichen Bildschirm, bestehen kann, welcher besonders platzsparend und übersichtlich am Arbeitsplatz aufgestellt werden kann und beispielsweise im Vergleich zu einer Tastatur weitgehend unempfindlich gegen die in technischen Betrieben wie z.B. Kfz-Werkstätten üblichen Störeinflüsse (Staub, Materialpartikel, Hitze, Fett, Öl etc.) ist.

Es ist aber bei Verwendung eines berührungsempfindlichen Bildschirms auch möglich und bei Verwendung eines üblichen Bildschirms sogar erforderlich, daß die Bedienungseinheit eine Tastatur und/oder eine Cursor-Steuervorrichtung, insbesondere Computermaus, zur Kommunikation mit dem Zentralcomputer aufweist. Diese letztgenannte Ausführungsform bietet den Vorteil, daß als Bedienungseinheit ein handelsüblicher und preisgünstiger PC eingesetzt werden kann.

Unabhängig von der speziellen Gestaltung der Bedienungseinheit ist vorgesehen, daß bei Einsetzen des Computernetzwerks in einem technischen Betrieb der Bildschirm wenigstens eines der folgenden Felder anzeigt: ein Feld "Prüf- und Einsteildaten" zum Abrufen der Prüf- und Einstelldaten eines angewählten Bauteils/einer angewählten Position; ein Feld "Teile" zum Aufrufen der Teilenummer und zum Bestellen eines angewählten Bauteils/einer angewählten Position; ein Feld "Reparatur-Anleitung" zum Abrufen der Reparatur-Anleitung eines angewählten Bauteils einer angewählten Position; ein Feld "Zusatzarbeiten" zum Abrufen der einem angewählten Bauteil/einer angewählten Position zugeordneten Prüf- und Zusatzarbeiten; ein Feld "Theorie" zum Abrufen von einem angewählten Bauteil/einer angewählten Position zugeordneten theoretischen Informationen; ein Feld "link" zum Setzen eines Verweises zwischen einem angewählten Bauteil/einer angewählten Position und einer anderen Datei; ein Feld "print" zum Ausdrucken der Bildschirmansicht.

Die Felder "Prüf- und Einstelldaten", "Teile", "Reparaturanleitung", "Zusatzarbeiten" und "Theorie" entsprechen dabei typischen Datenbanken, auf die in einem technischen Betrieb, wie z. B. einer Kfz-Werkstatt, an einem Arbeitsplatz, wie z. B. einer Hebebühne für Kfz-Reparaturen, zugegriffen wird. Das Antippen eines dieser Felder entspricht dem oben beschriebenen Zieldatei-Darstellungsbefehl, gleichzeitiges Antippen des Feldes "link" entspricht dem oben beschriebenen Zieldatenbank-Darstellungsbefehl. Das Feld "print" veranlaßt das Ausdrucken der Bildschirmansicht auf einem wahlweise angeschlossenen Drucker, damit bestimmte Informationen in ausgedruckter Form an solche Stellen des Arbeitsplatzes mitgenommen werden können, von denen aus der Bildschirm nicht einsehbar ist.

Bei Verwendung eines solchen Computernetzwerks mit einem berührungsempfindlichen Bildschirm ist ferner vorgesehen, daß der berührungsempfindliche Bildschirm folgende Felder anzeigt: ein Feld "Cursor" zum Anwählen von auf dem Bildschirm dargestellten Bauteilen oder Positionen und ein Feld "Enter" zum Bestätigen und somit Auswählen der angewählten Bauteile oder Positionen. Beim Verwenden einer Bedienungseinheit mit einem üblichen Bildschirm, wie z. B. einem handelsüblichen PC, können diese Funktionen von den entsprechenden Tasten auf der Tastatur und/oder von der Cursor-Steuervorrichtung, wie z. B. einer Computermaus oder einem Trackball übernommen werden.

Um dem Benutzer am Arbeitsplatz stets aktuelle Informationen bieten zu können, ist es vorteilhaft, daß das Computernetzwerk über eine Weitverkehrsnetz-Verbindung mit einem anderen Computer, insbesondere in einem anderen Betrieb, wie z. B. Herstellerwerk, verbunden ist, von dem es neue Daten zu den möglichen Ausgangs- und Zieldatenbanken zum Speichern auf dem Speichermedium seines Zentralcomputers empfängt. Auf diese Weise kann z. B. ein Kfz-Hersteller den an das Weiterverkehrsnetz angeschlossenen Kfz-Werkstätten aktuelle Informationen, z. B. über neue Bauteile, deren Reparatur und eventuelle theoretische Hintergründe, übermitteln.

In einer Weiterentwicklung der Erfindung ist das Computernetzwerk derart an ein Weitverkehrsnetz, insbesondere das Internet, angeschlossen ist, daß bestimmte Dateien von jedem anderen an dieses Weitverkehrsnetz angeschlossenen Computer aus zugänglich sind. In diesem Fall dient das Computernetzwerk nicht nur als betriebsinternes Arbeitsmittel, sondern auch als Werbe- und Informationsvorrichtung nach außen. Im häufigen Fall einer mit einem Kfz-Händler verbundenen Kfz-Werkstatt können einem potentiellen Kunden somit beispielsweise bestimmte Bilder oder technische Informationen über Fahrzeuge angeboten werden. Diese Ausführung eröffnet ferner die Möglichkeit, daß sich ein Kunde von zu Hause aus über das Internet über den Stand einer an seinem Fahrzeug vorgenommenen Reparatur informiert.

Die Erfindung wird im folgenden an bevorzugten Ausführungsbeispielen anhand der Zeichnung erläutert. Es zeigt:
- Fig. 1: einen schematischen Aufbau des Computernetzwerks zur Durchführung des erfindungsgemäßen Verfahrens;
- Fig. 2: eine typische Ansicht eines berührungsempfindlichen Bildschirms (touch screen) aus Fig. 1; und
- Fig. 3: ein Flußdiagramm zur Erläuterung der Verwendung bzw. Herstellung von Verweisen in dem Computernetzwerk aus Fig. 1 unter Einsatz des berührungsempfindlichen Bildschirms aus Fig. 2.

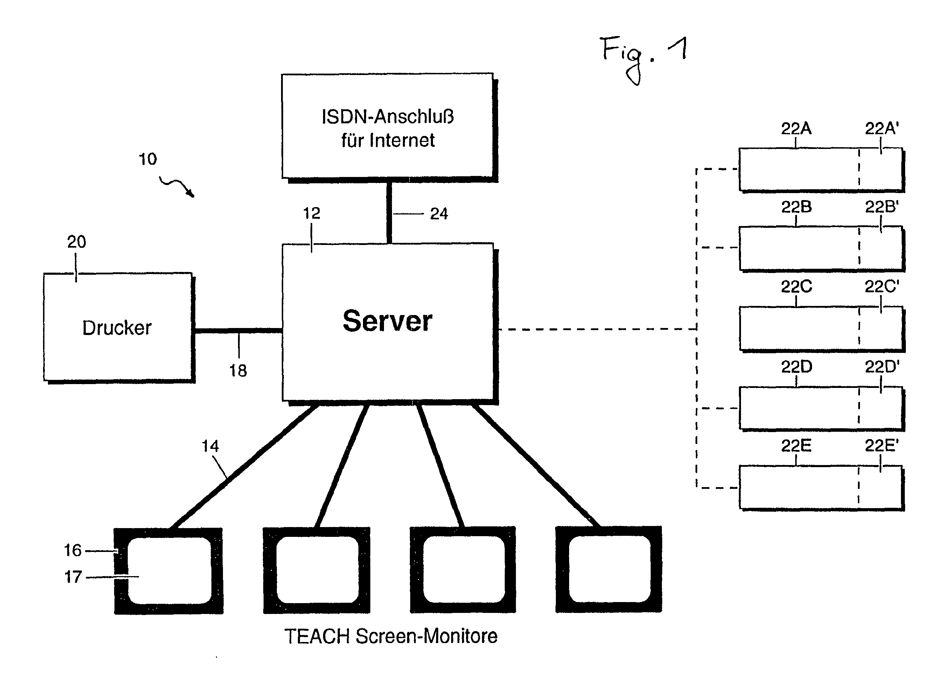

Fig. 1 zeigt schematisch den Aufbau eines Computernetzwerks 10 zur Durchführung des erfindungsgemäßen Verfahrens. Ein Zentralcomputer (Server) 12 ist über Leitungen 14 mit Bedienungseinheiten 16 verbunden, die in diesem Beispiel als berührungsempfindlichen Bildschirme (touch screens) 17 ausgebildet sind. Während die berührungsempfindlichen Bildschirme 17 an verschiedenen Arbeitsplätzen innerhalb eines Betriebes aufgestellt sind, befindet sich der Zentralcomputer 12 oft in einem hierfür speziell ausgelegten, abgeschlossenen Raum. Der Zentralcomputer 12 ist ferner über ein Druckerkabel 18 mit einem üblichen Drucker 20 verbunden, der vorzugsweise so aufgestellt ist, daß er von verschiedenen, mit Bedienungseinheiten 16 ausgestatteten Arbeitsplätzen aus leicht erreichbar ist. Auf diese Weise wird es den Benutzern des Computernetzwerks 10 ermöglicht, einen Ausdruck einer betrachteten Datei auch an solche Stellen ihres Arbeitsplatzes mitzunehmen, von denen aus der Bildschirm 17 nicht einsehbar ist. Außerdem ist der Zentralcomputer 12 über eine WAN-Verbindung 24 mit einem Weitverkehrsnetz verbunden. Dies ermöglicht in der oben beschriebenen Weise die Kommunikation mit ähnlichen Computernetzwerken in anderen Betrieben sowie den Zugang zu bestimmten Informationen auf dem Zentralcomputer 12 von außen über das Internet.

Auf dem Speichermedium (nicht gezeigt) des Zentralcomputers 12 sind Datenbanken 22A-22E gespeichert. Jede Datenbank 22A-22E enthält zu einem bestimmten inhaltlichen Gebiet Informationen in Form von Dateien, die der Benutzer auf dem Bildschirm 17 an seinem Arbeitsplatz betrachten kann. Darüber hinaus umfaßtjede Datenbank 22A-22E eine anfänglich leere Verweise-Datenbank 22A'-22E', in der Zuordnungsinformationen gespeichert werden, welche die in der jeweiligen Datenbank 22A-22E vorhandenen Ausgangsdateien mit Zieldateien in anderen Datenbanken 22A-22E verbinden. Wird also beispielsweise einer Ausgangsdatei in der Ausgangsdatenbank 22A eine Zieldatei in der Zieldatenbank 22B zugeordnet, so wird ein aus dieser Zuordnungsinformation hergestellter Verweis in der Verweise-Datenbank 22A' der Ausgangsdatenbank 22A gespeichert. Es ist beim erfindungsgemäßen Verfahren möglich, aber nicht notwendig, auch im Bereich 22B' der Zieldatenbank 22B, in der sich die Zieldatei befindet, eine entsprechende Information abzuspeichern.

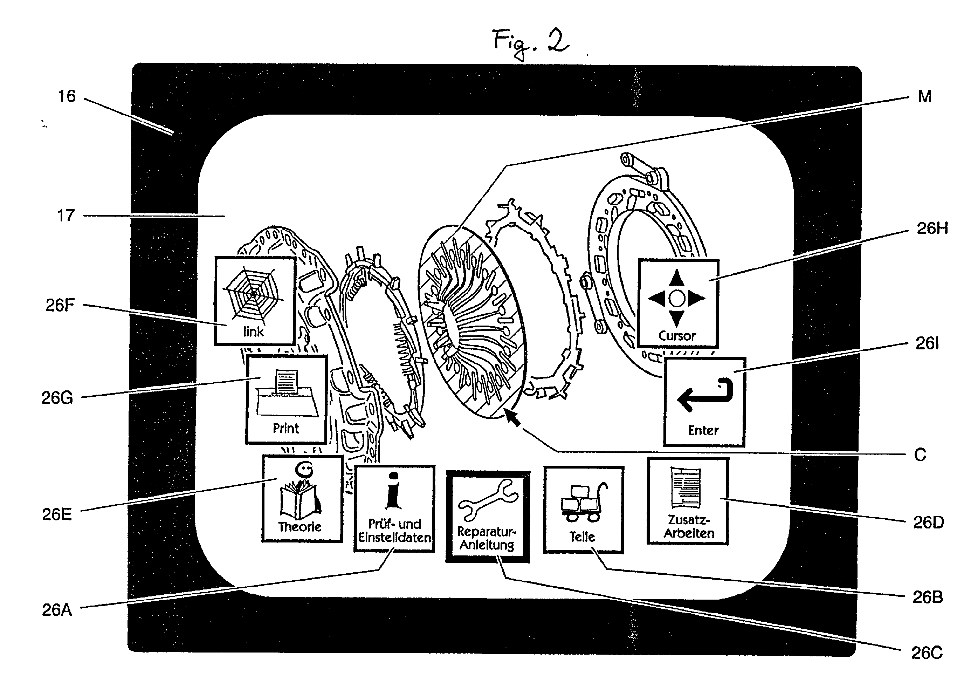

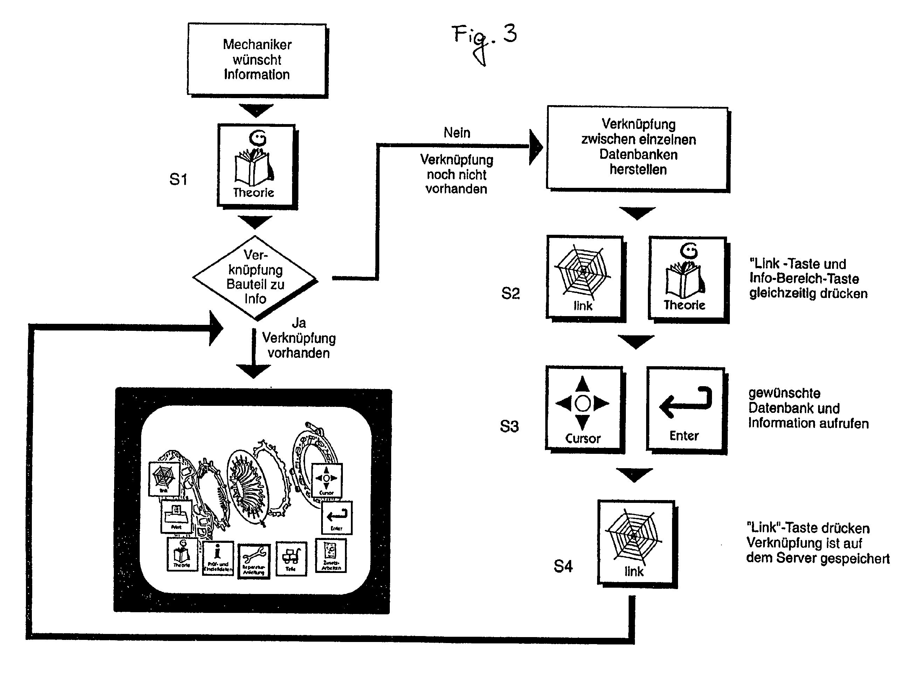

Das erfindungsgemäße Verfahren zum Herstellen und Verwenden von Verweisen zwischen Dateien bei der Benutzung des Computernetzwerks 10 wird im folgenden anhand der Fig. 2 und 3 am Beispiel eines in einer Kfz-Werkstatt eingesetzten Computernetzwerks 10 erläutert. Der Benutzer, in diesem Fall ein Kfz-Mechaniker, erhält bei Arbeitsbeginn auf dem berührungsempfindlichen Bildschirm 17 eine Übersicht aller für ihn vorgesehenen Arbeitsaufträge, ggf. auch mit Zeitangabe der gewünschten Fertigstellung bzw. mit einer Prioritätenliste. Zunächst wählt der Benutzer mit Hilfe des Cursor-Felds 26H einen der Arbeitsaufträge an. Das Cursor-Feld 26H erlaubt die beliebige Positionierung eines Cursors (Bildschirmzeigers) C auf dem Bildschirm 17 und ist hierzu in vier Teilfelder, nämlich ein oberes, ein unteres, ein linkes und ein rechtes Teilfeld, aufgeteilt. Das Antippen des jeweiligen Teilfelds innerhalb des Cursor-Felds 26H verschiebt den Cursor C in der entsprechenden Richtung auf dem Bildschirm 17. Der auf diese Weise angewählte Arbeitsauftrag wird durch Bestätigen mit dem Enter-Feld 261 ausgewählt. Es erscheint entweder unmittelbar oder nach weiteren, ähnlich verlaufenden Auswahlvorgängen, die Explosionszeichnung eines zu bearbeitenden Bauteils aufdem Bildschirm 17 (siehe Fig. 2). Zu jedem der das Bauteil bildenden Einzelteile stehen dem Benutzer Informationen in Dateien aus den Datenbanken "Prüf- und Einsteildaten" 22A, "Teile" 22B, "Reparatur-Anleitung" 22C, "Zusatzarbeiten" 22D und "Theorie" 22E zur Verfügung.

Beispielsweise kann bei Arbeiten an einer Kfz-Kupplung (siehe Fig. 2) die "Prüf- und Einstelldaten"-Datenbank 22A Informationen über die Soll-Abstände der Einzelteile enthalten, die "Teile"-Datenbank 22B enthält Bestelldaten wie z.B. die zugehörige Teilenummer und erlaubt die Bestellung eines Teils aus einem Lager, die "Reparatur-Anleitung"-Datenbank 22C ehthält die Anleitung beispielsweise zum Einbau einer neuen Kupplungsscheibe, die "Zusatzarbeiten"-Datenbank umfaßt Informationen zu anschließenden Arbeiten wie z.B. dem Nachstellen der Kupplung und die "Theorie"-Datenbank 22E enthält allgemeine Informationen zum Aufbau einer Kupplung und zu den verwendeten Materialien.

Wenn der Benutzer nun Informationen zu einem auf dem Bildschirm 17 dargestellten Einzelteil M wünscht, so wählt er dieses zunächst mit Hilfe des Cursor-Felds 26H und des Enter-Felds 26I aus. So ist z.B. in Fig. 2 der Cursor C auf der ungefähr in der Mine des Bildschirms 17 dargestellten Membranfeder M der Kupplung positioniert und anschließend das Enter-Feld 261 betätigt worden, wodurch das ausgewählte Einzelteil M auf dem Bildschirm 17 optisch hervorgehoben, z.B. farbig unterlegt oder in einer anderen Helligkeitsstufe als die anderen Einzelteile dargestellt wird. In einem anschließenden Schritt S1 tippt der Benutzer auf ein Feld 26A-26E, welches der Datenbank 22A-22E zugeordnet ist, aus der er Informationen wünscht. Im Flußdiagramm von Fig. 3 ist dies am Beispiel einer gewünschten Information aus der "Theorie"-Datenbank 22E erläutert. Wenn aufgrund einer früheren Zuordnung von der die Ausgangsdatei mit dem angewählten Einzelteil M enthaltenden Ausgangsdatenbank 22A-22E bereits ein Verweis zu einer Zieldatei in der "Theorie"-Zieldatenbank 26E existiert, so wird diese Zieldatei unmittelbar auf dem Bildschirm 17 dargestellt. Das Antippen des "Theorie"-Felds 26E im Schritt S1 wirkt in diesem Fall als Zieldateidarstellungsbefehl, der die unmittelbare Darstellung einer bereits zugeordneten Zieldatei veranlaßt. Zur besonderen Erleichterung der Arbeit mit dem berührungsempfindlichen Bildschirm 17 kann vorgesehen sein, daß nach dem Auswählen eines Einzelteils M auf dem Bildschirm 17 all jene Antippfelder 26A-26E optisch hervorgehoben, z. B. farbig unterlegt werden, die solchen Datenbanken 22A-22E zugeordnet sind, in denen bereits Zieldateien der das angewählte Bauteil enthaltenden Ausgangsdatei zugeordnet worden sind. So ist z.B. in Fig. 2 nach dem oben erläuterten Auswählen der Membranfeder M der Kupplung in der Mine des Bildschirms 17 das Feld "Reparatur-Anleitung" 26C optisch hervorgehoben, da bereits aufgrund einer früheren Zuordnung ein Verweis von der die Membranfeder-Graphik enthaltenden Ausgangsdatei zu einer Zieldatei in der die Reparatur-Anleitungen enthaltenden Zieldatenbank 22C existiert.

Während der gesamten Arbeit am berührungsempfindlichen Bildschirm 17 kann die momentane Bildschirmansicht durch Antippen des "print"-Felds 26G auf dem angeschlossenen Drucker 20 ausgedruckt werden.

Wenn dem auf dem Bildschirm 17 angewählten Einzelteil M in der durch Antippen des entsprechenden Felds 26A-26E im Schritt S1 ausgewählten Datenbank 22A-22E jedoch noch keine Zieldatei zugeordnet worden ist, so erscheint auf dem Bildschirm 17 ein Hinweisfenster, in dem der Benutzer aufgefordert wird, selber einen Verweis herzustellen. Hierzu tippt der Benutzer in einem Schritt S2 (siehe Fig. 3) gleichzeitig das "Link"-Feld 26F und das der gewünschten Datenbank 22A-22E zugeordnete Feld 26A-26E an. Dieser Zieldatenbankdarstellungsbefehl veranlaßt das Öffnen eines Fensters auf dem Bildschirm 17, in dem eine Auswahldarstellung der Zieldatenbank angezeigt wird. Diese Auswahldarstellung kann vorzugsweise in einervon den "Dateimanagern" verschiedener Betriebssysteme bekannten graphischen Weise erfolgen. Durch unter Umständen wiederholtes Verwenden des "Cursor"-Felds 26H und des "Enter"-Felds 26I kann der Benutzer in einem Schritt S3 Verzeichnisse und Dateien innerhalb der Zieldatenbank 26E öffnen, bis er die die gewünschte Information enthaltende Zieldatei gefunden hat. Durch nochmaliges Antippen des "Link"-Felds 26F in einem abschließenden Schritt S4 speichert er die Zuordnungsinformation über die Zuordnung der gefundenen Zieldatei zu der das anfänglich betrachtete Einzelteil M enthaltenden Ausgangsdatei ab. Wie oben erläutert, kann das Abspeichern der Zuordnungsinformation je nach Auslegung des Computernetzwerks 10 als Verweisherstellungsbefehl wirken, der direkt die Herstellung und Abspeicherung des Verweises auf dem Speichermedium des Zentralcomputers 12 veranlaßt. Es ist aber auch möglich, daß die Zuordnungsinformation in einer Statistikdatei auf dem Speichermedium des Zentralcomputers 12 gespeichert wird, und daß später auf Grundlage dieser gespeicherten Zuordnungsinformationen Verweise manuell (z. B. durch einen Netzwerk-Verwalter) oder selbsttätig (durch ein von dem Zentralcomputer 12 vorzugsweise nachts ausgeführtes Programm) hergestellt werden.

Nach Herstellen des Verweises auf eine der beschriebenen Arten wirkt bei einer späteren, erneuten Betrachtung der gleichen Ausgangsdatei mit dem ausgewählten Einzelteil M das Antippen des in diesem Fall beschriebenen "Theorie"-Felds 26E (welches bereits ab dem Zeitpunkt des Auswählens des Einzeltells M auf dem Bildschirm 17 optisch hervorgehoben ist, vergleichbar dem Feld "Reparatur-Anleitung" 26C in Fig. 2) als Zieldateidarstellungsbefehl, der wie oben beschrieben die unmittelbare Darstellung der Zieldatei auf dem Bildschirm 17 veranlaßt. Hierbei können die Verweise in den Verweise-Datenbanken 22A'-22E' innerhalb der Datenbanken 22A-22E derart abgespeichert sein, daß sie nur der Bedienungseinheit 16 zur Verfügung stehen, von der aus sie hergestellt wurden, oder sie können sämtlichen Bedienungseinheiten 16 zur Verfügung stehen. Insbesondere im letztgenannten Fall können die Verweise-Datenbanken 22A'-22E' über die Weitverkehrsnetz-Verbindung 24 mit den entsprechenden Verweise-Datenbanken ähnlicher technischer Betriebe verglichen und ggf. aktualisiert werden.

In jedem Fall aber dient die Weitverkehrsnetz-Verbindung 24 zur Kommunikation mit Betrieben, von denen die betrachtete Kfz-Werkstatt Bauteile und/oder Informationen erhält, in der Regel also mit einem Herstellerwerk. Ferner erlaubt die WAN-Verbindung 24 in der eingangs beschriebenen Weise das Bereitstellen von Informationen für dritte Teilnehmer des Weitverkehrsnetzes, insbesondere für Kunden der Kfz-Werkstatt.

Das vorgestellte Verfahren zum Herstellen von Verweisen zwischen Dateien von Datenbanken in dem beschriebenen Computernetzwerk ist nicht auf eine Verwendung in dem beispielhaft genannten technischen Betrieb, und insbesondere nicht auf eine Verwendung in der beispielhaft genannten Kfz-Werkstatt beschränkt. Es kann vielmehr in jedem Computernetzwerk, sogar in einem nicht an ein Netzwerk angeschlossenen Einzelcomputer, verwendet werden, indem man Verweise zwischen verschiedenen Dateien unter Vermeidung der eingangs geschilderten Nachteile üblicher Verweisherstellungsmethoden herstellen möchte. Insbesondere ist die Anzahl und die Bezeichnung der Datenbanken, zwischen deren Dateien Verweise hergestellt werden sollen, nicht auf die in der beschriebenen Ausführungsform genannten Beispiele beschränkt.

## Patentansprüche

1. Verfahren zum Herstellen von Verweisen zwischen Dateien in Datenbanken (22A-22E), die auf einem Speichermedium eines Zentralcomputers (12) eines Computernetzwerks (10) gespeichert sind, wobei das Computernetzwerk (10) ferner wenigstens eine Bedienungseinheit (16) zur Kommunikation mit dem Zentralcomputer (12) und zur Betrachtung des Inhalts der Dateien auf einem Bildschirm (17) umfasst,
- wobei das Herstellen eines Verweises zwischen Dateien auf Grundlage der von einem Benutzer bei der Verwendung des Computernetzwerks (10) vorgenommenen Zuordnung einer Zieldatei einer Zieldatenbank (22A-22E) zu einer anfänglich betrachteten Ausgangsdatei einer Ausgangsdatenbank (22A-22E) erfolgt,
- wobei bei einer späteren, erneuten Betrachtung der Ausgangsdatei ein Zieldateidarstellungsbefehl eingebbar ist zur unmittelbaren Darstellung der dem jeweiligen Verweis entsprechenden Zieldatei auf dem Bildschirm (17),
- wobei ein von dem Zentralcomputer (12) ständig ausgeführtes Überwachungsprogramm vom Benutzer erzeugte Zuordnungsinformationen, die jeweils eine Ausgangsdatei und eine dieser zugeordnete Zieldatei angeben, in einer Statistikdatei speichert, die auch die Häufigkeit der Herstellung gleicher Zuordnungsinformationen in einem Computernetzwerk mit mehreren Bedienungseinheiten und/oder mehreren Benutzern (16) speichert,
- wobei der Zentralcomputer (12) zu einem wahlweisen Zeitpunkt selbsttätig oder manuell ausgelöst aus den gespeicherten Zuordnungsinformationen entsprechende Verweise herstellt und dabei bei Auftreten von unterschiedlichen Zuordnungsinformationen , die ein- und dieselbe Ausgangsdatei mit unterschiedlichen Zieldateien in ein- und derselben Zieldatenbank verknüpfen, den der Ausgangsdatei zugeordneten Verweis auf der Grundlage der Zuordnungsinformation mit der größten Häufigkeit herstellt, und
- wobei die so hergestellten Verweise in einer Verweise-Datenbank (22A'-22E') abgespeichert werden, die sämtlichen Bedienungseinheiten und/oder Benutzern (16) zur Verfügung steht.

2. Verfahren nach Anspruch 1, **dadurch gekennzeichnet, dass** der Zieldateidarstellungsbefehl durch Auswählen, insbesondere Anklicken, eines Feldes, beispielsweise eines Icons, auf dem Bildschirm (17) eingebbar ist, wobei das Feld der die Zieldatei enthaltenden Zieldatenbank (22A-22E) zugeordnet ist.

3. Verfahren nach Anspruch 2, **dadurch gekennzeichnet, dass** bei Betrachtung der Ausgangsdatei nach dem Auswählen eines Gegenstands auf den Bildschirm (17) all jene Felder optisch hervorgehoben, beispielsweise farbig unterlegt werden, die solchen Datenbanken (22A-22E) zugeordnet sind, in denen bereits Zieldateien der Ausgangsdatei zugeordnet worden sind.

4. Verfahren nach einem der vorhergehenden Ansprüche, **dadurch gekennzeichnet, dass** die Verweise-Datenbank (22A'-22E') in Zentralcomputer (12) anderer Computernetzwerte (10) übertragbar ist, vorzugsweise über eine Weitverkehrsnetz-Verbindung (24).

## Claims

1. Method for setting up references between files in databases (22A-22E) which are stored on a storage medium on a central computer (12) in a computer network (10), the computer network (10) also comprising at least one operator control unit (16) for communication with the central computer (12) and for viewing the content of the files on a screen (17),
- wherein a reference is set up between files on the basis of the association which a user makes, when using the computer network (10), between a target file in a target database (22A-22E) and a starting file, viewed initially, in a starting database (22A-22E),
- wherein when the starting file is subsequently viewed again, a target file display command can be input for the purpose of immediately displaying the target file corresponding to the respective reference on the screen (17),
- wherein a monitoring program continually executed by the central computer (12) stores user-generated association information, which indicates a respective starting file and an associated target file, in a statistics file, which also stores the frequency with which the same association information is produced in a computer network having a plurality of operator control units and/or a plurality of users (16),
- wherein the central computer (12) sets up appropriate references from the stored association information at a selective time automatically or upon manual initiation and in so doing, on the appearance of different association information linking one and the same starting file to different target files in one and the same target database, sets up the reference associated with the starting file on the basis of the association information with the greatest frequency, and
- wherein the references set up in this manner are stored in a reference database (22A'-22E') which is available to all operator control units and/or users (16).

2. Method according to Claim 1, **characterized in that** the target file display command can be input by selecting, particularly clicking on, a field, for example an icon, on the screen (17), wherein the field is associated with the target database (22A-22E) containing the target file.

3. Method according to Claim 2, **characterized in that** when viewing the starting file following selection of an article on the screen (17), all those fields which are associated with databases (22A-22E) in which target files have already been associated with the starting file are visibly highlighted, for example provided with a coloured background.

4. Method according to one of the preceding claims, **characterized in that** the reference database (22A'-22E') can be transferred to central computers (12) in other computer networks (10), preferably via a wide area network connection (24).

## Revendications

1. Procédé de création de renvois entre des fichiers dans des bases de données (22A-22E) qui sont enregistrées sur un support d'enregistrement d'un ordinateur central (12) d'un réseau informatique (10), le réseau informatique (10) comprenant en plus au moins une unité de commande (16) pour communiquer avec l'ordinateur central (12) et pour observer le contenu des fichiers sur un écran (17),
- la création d'un renvoi entre des fichiers étant effectuée sur la base d'une association appliquée par un utilisateur lors de l'utilisation du réseau informatique (10) entre un fichier destinataire d'une base de données destinataire (22A-22E) et un fichier initial considéré au départ d'une base de données initiale (22A-22E),
- une instruction de représentation du fichier destinataire pouvant être saisie lors d'une nouvelle observation ultérieure du fichier initial en vue de la représentation directe à l'écran (17) du fichier destinataire correspondant au renvoi respectif,
- un programme de surveillance exécuté en permanence par l'ordinateur central (12) enregistrant les informations d'association générées par l'utilisateur, lesquelles indiquent respectivement un fichier initial et un fichier destinataire qui lui est associé, dans un fichier de statistiques qui enregistre également la fréquence de création des informations d'association identiques dans un réseau informatique comprenant plusieurs unités de commande et/ou plusieurs utilisateurs (16),
- l'ordinateur central (12) créant à un moment au choix, automatiquement ou sur déclenchement manuel, les renvois correspondant à partir des informations d'association enregistrées et, en présence d'informations d'association différentes qui lient un seul et même fichier initial à des fichiers destinataires différents dans une seule et même base de données, créant le renvoi associé au fichier initial en se basant sur l'information d'association ayant la fréquence la plus élevée, et
- les renvois ainsi créés étant enregistrés dans une base de données de renvois (22A'-22E') qui est à la disposition de toutes les unités de commande et/ou de tous les utilisateurs (16).

2. Procédé selon la revendication 1, **caractérisé en ce que** l'instruction de représentation du fichier destinataire peut être saisie en sélectionnant, notamment en cliquant sur une zone, par exemple une icône sur l'écran (17), la zone étant associée à la base de données destinataire (22A-22E) qui contient le fichier destinataire.

3. Procédé selon la revendication 2, **caractérisé en ce que** lors de l'observation du fichier initial après la sélection d'un objet sur l'écran (17), toutes les zones qui sont associées à des bases de données (22A-22E) dans lesquelles des fichiers destinataires ont déjà été associés au fichier initial sont mises en valeur visuellement, par exemple en apparaissant sur fond de couleur.

4. Procédé selon l'une quelconque des revendications précédentes, **caractérisé en ce que** la base de données de renvois (22A'-22E') peut être transférée dans l'ordinateur central (12) d'autres réseaux informatiques (10), de préférence par le biais d'une liaison de réseau étendu (24).
